# EUROPEAN PATENT SPECIFICATION

(11) **EP 2 676 769 B1**
(45) Date of publication and mention of the grant of the patent: **23.11.2016**
(21) Application number: 11858766.6
(22) Date of filing: 14.02.2011
(51) Int. Cl.: B23Q 11/00

(54) **MACHINE TOOL**
MASCHINENWERKZEUG
MACHINE-OUTIL

(43) Date of publication of application: 25.12.2013
(73) Proprietor: Makino Milling Machine Co., Ltd., Tokyo 152-8578 (JP)
(72) Inventor: NAKAYASU, Kazumasa, Aiko-gun, Kanagawa 243-0303 (JP); SUGIMURA, Tomoaki, Aiko-gun, Kanagawa 243-0303 (JP)
(74) Representative: Thum, Bernhard
(86) International application number: PCT/JP2011/053587
(87) International publication number: WO 2012/111164

(56) References cited:
- EP-A1- 1 223 004
- JP-A- 3 073 211
- JP-A- 2002 233 921
- JP-A- 2006 159 303
- JP-A- 2006 159 303
- JP-U- H0 574 744
- JP-U- 62 050 037
- US-A- 2 291 508

## Description

### Technical Field

The present invention relates to a machine tool, more particularly relates to a machine tool which machines a workpiece by NC (numerical control).

### Background Art

For example, PLT 1 discloses a lathe which is provided with a control console which can be changed in position or direction of the control panel. In this lathe, the control console is provided with a movable base which moves linearly in a horizontal direction by being guided by a slide guide and with a control console body which is supported on the movable base to be able to pivot about a vertical axis. According to such a lathe, an operator can change the position or orientation of the control panel by horizontal movement of the movable base and by pivoting about the vertical axis.

### Citations List

### Patent Literature

PLT 1: Japanese Patent No. 3233852

### Summary of Invention

### Technical Problem

In such a lathe, in realizing horizontal movement and pivoting about the vertical axis of the control console, the lathe has to be built with movement mechanisms such as a slide guide and rotary shaft along the vertical axis. As a result, an increase in the manufacturing cost of the lathe ends up being invited. Further, the position and orientation of the control panel are freely determined by the operator, so the control panel is not necessarily oriented in the direction of the operator. In this case, there is the danger of a delay in the timing at which an emergency stop button which is arranged on the control panel is pushed by the operator.

From document EP 1 223 004 A1, on which the preamble of claim 1 is based, a machine tool is known wherein a control console is arranged at an outside of a housing of the machine tool and is pivotable relative thereto about a vertical axis.

From document JP 2006 159303 A, an emergency stop device is known including a simultaneous depression detection circuit 8 for operating a servo power supply breaker 4 when a simultaneous depression of two or more keys in the operation keys of an NC operation panel in addition to an emergency stop switch occurs.

The present invention was made in consideration of the above situation and has as its object the provision of a machine tool which enables the visibility of an emergency stop switch to be improved regardless of a simplified design.

### Solution to Problem

To achieve the above object, according to the present invention, there is provided a machine tool as defined in claim 1.

As a result, an operator can reliably see the emergency stop switch from both the front side of the first outside surface and the front side of the second outside surface. Therefore, the operator can reliably operate the emergency stop switch quickly at the time of an emergency. Further, it is sufficient to arrange as few as a single emergency stop switch at an edge part of the splash guard, so compared with the past where a complicated movement mechanism was required, the machine tool is simplified in structure.

In the machine tool according to the present invention, the edge part is formed from a chamfered surface which intersects the first outside surface and the second outside surface, and the emergency stop switch is arranged on the chamfered surface.

According to this machine tool, since the emergency stop switch is arranged on a chamfered surface, the operator can reliably see the emergency stop switch from both the front side of the first outside surface and the front side of the second outside surface.

In a machine tool apart from the presently claimed invention, the emergency stop switch is arranged on a chamfered surface which is formed at a control console which is attached to the first outside surface or the second outside surface of the splash guard.

According to this machine tool, the emergency stop switch is arranged on a chamfered surface which is formed at a control console and thereby arranged at an edge part of the splash guard. Therefore, the operator can reliably see the emergency stop switch from both the front side of the first outside surface and the front side of the second outside surface.

### Brief Description of Drawings

Fig. 1 is a perspective view which schematically shows the structure of a machine tool according to a first embodiment of the present invention.
Fig. 2 is a block diagram which schematically shows the configuration of a control system of the machine tool according to the first embodiment of the present invention.
Fig. 3 is a partial see-through side view which schematically shows a machine body of the machine tool according to the first embodiment of the present invention.
Fig. 4 is a perspective view which schematically shows the state at the time of use of the machine tool according to the first embodiment of the present invention.
Fig. 5 is a perspective view which schematically shows the structure of a machine tool according to a second embodiment which is apart from the presently claimed invention.

### Description of Embodiments

Below, embodiments of the present invention will be explained while referring to the attached drawings.

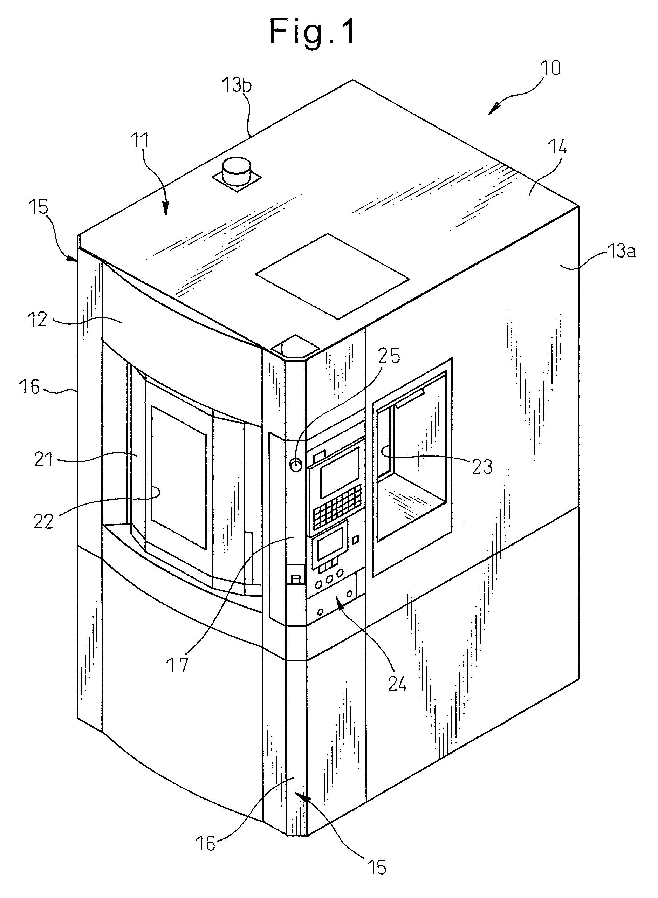

Fig. 1 is a perspective view which schematically shows the structure of a machine tool 10 according to a first embodiment of the present invention. This machine tool 10 is provided with a machine body which performs predetermining machining operations on a workpiece and an NC system which controls the operation of the machine body. Details of the machine body will be explained later. The NC system has an emergency stop system of the present invention. For the machine tool 10, for example, a four-axis horizontal machining center is used. Note that, the machine tool 10 includes for example a five-axis or vertical machining center, lathe, milling machine, electrical discharge machining machine, and other machine tools.

The machine tool 10 is provided with a splash guard 11 which surrounds the machine body. The splash guard 11 is provided with a front panel 12 which stands up from the bottom surface and covers the front of the machine body, a right side panel 13a and a left side panel 13b which stand up from the bottom surface and cover the sides of the machine body while extending in parallel with each other, a ceiling panel 14 which extends along a horizontal plane which is parallel to the bottom surface and covers the top surface of the machine body, and a back surface panel (not shown) which covers the back surface of the machine body. In the present embodiment, among the surface of the front panel 12, the surfaces of the side panels 13a, 13b, and the surface of the back surface panel, the surfaces of one of the panels forms the "first outside surface" and the surface of one of the panels which adjoin that one panel forms the "second outside surface".

The surfaces of the side panels 13a, 13b intersect the surface of the front panel 12 by for example 90 degree angles of intersection. Between the front panel 12 and the side panels 13a, 13b, a pair of edge parts 15, 15 which extend in the vertical direction are formed. An "edge part 15" of the present invention means a part near the vertical line where the first outside surface and second outside surface intersect. In the present embodiment, the edge parts 15 are formed with chamfered surfaces 16. The chamfered surfaces 16 are for example defined by planes. The chamfered surfaces 16 intersect the surface of the front panel 12 and the surfaces of the side panels 13a, 13b by for example 45 degree angles of intersection. However, the angles of intersection do not necessarily have to be 45 degrees. The angles of intersection of the surface of the front panel 12 and the chamfered surfaces 16 and the angles of intersection of the surfaces of the side panels 13a, 13b and the chamfered surfaces 16 may also be different.

The front panel 12 is provided with a slide door 21 which allows access to the space inside of the splash guard 11. The slide door 21 is opened by sliding it from the right side toward the left side when viewing the front panel 12 from the front side. In this way, the inside space is opened toward the outside space. The slide door 21 is formed with a rectangular monitoring window 22. The monitoring window 22 has a transparent glass sheet fit into it. Through the monitoring window 22, the operator of the machine tool 10 can view the inside space of the splash guard 11.

The right side panel 13a is provided with a rectangular monitoring window 23. The monitoring window 23 has a transparent glass sheet fit into it. Here, the monitoring window 23 is arranged at a position deeper toward the inside space from the right side panel 13a. The height from the bottom surface to the monitoring window 23 is set to the same extent as the height from the bottom surface to the monitoring window 22. Note that, while not shown in Fig. 1, the left side panel 13b may also be provided with a monitoring window which has a configuration similar to the monitoring window 23 of the right side panel 13a.

The right side panel 13a has a control console 24 built into it which adjoining the monitoring window 23. The control console 24 is connected to the above-mentioned NC system. The control console 24 is arranged between the slide door 21 and the monitoring window 23. The control console 24 is formed with a chamfered surface 17. This chamfered surface 17 is provided on substantially the same plane as the chamfered surface 16 of the splash guard 11. At the control console 24, a display panel which displays the operating state of the machine body and various input buttons are arranged. In the present embodiment, the display panel and the input buttons are arranged adjoining the chamfered surface 17 of the control console 24. Through the control console 24, the operator can input operating instructions to the machine body inside of the splash guard 11.

The height from the bottom surface to the control console 24 is set to the same extent as the height from the bottom surface to the monitoring window 22 or the monitoring window 23. On the other hand, the control console 24 extends from the surface of the right side panel 13a over the chamfered surface 17 to the surface of the front panel 12. On the front panel 12, the control console 24 is arranged adjoining the slide door 21. In this way, the control console 24 forms part of the chamfered surface 16 of the splash guard 11 and part of the front panel 12 and right side panel 13a. On the control console 24 at the chamfered surface 17, an emergency stop switch, that is, an emergency stop button 25, is arranged.

In the present embodiment, the emergency stop button 25 is for example formed in a columnar shape. The axis center of the emergency stop button 25 perpendicularly intersects the chamfered surface 17. If the emergency stop button 25 is pressed along its axial center toward the chamfered surface 17, the above-mentioned emergency stop signal is output. The emergency stop button 25 is arranged on the control console 24 offset to the top edge side from an intermediate position of the top edge and bottom edge of the chamfered surface 17 defined in the vertical direction. Here, the emergency stop button 25 is arranged adjacent to the top edge of the chamfered surface 17. The emergency stop button 25 is arranged at a position higher than the monitoring window 22 or the monitoring window 23.

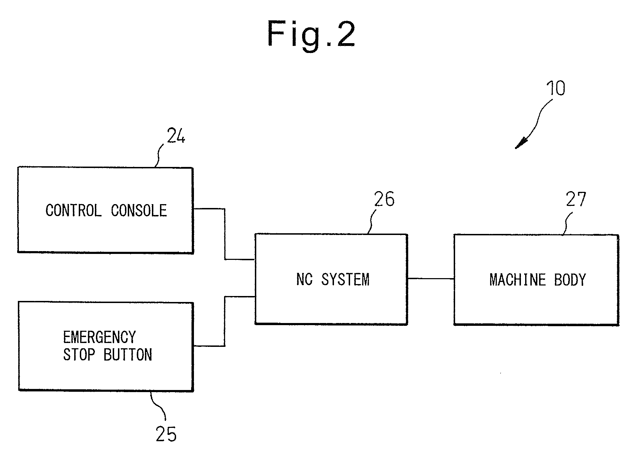

Fig. 2 is a block diagram which schematically shows the configuration of a control system of the machine tool 10 according to the first embodiment of the present invention. The NC system 26 is connected to the above-mentioned control console 24 and the emergency stop button 25. The NC system 26 is connected to the above-mentioned machine body 27. An operating instruction which is input from the control console 24 is output to the NC system 26. Receiving the operating instruction, the NC system 26 outputs a drive signal toward the machine body 27. On the other hand, if the emergency stop button 25 is pushed, an emergency stop signal for making the operation of the machine body 27 stop on an emergency basis is output to the NC system 26. The NC system 26 makes the operation of the machine body 27 stop on an emergency basis by an emergency stop system.

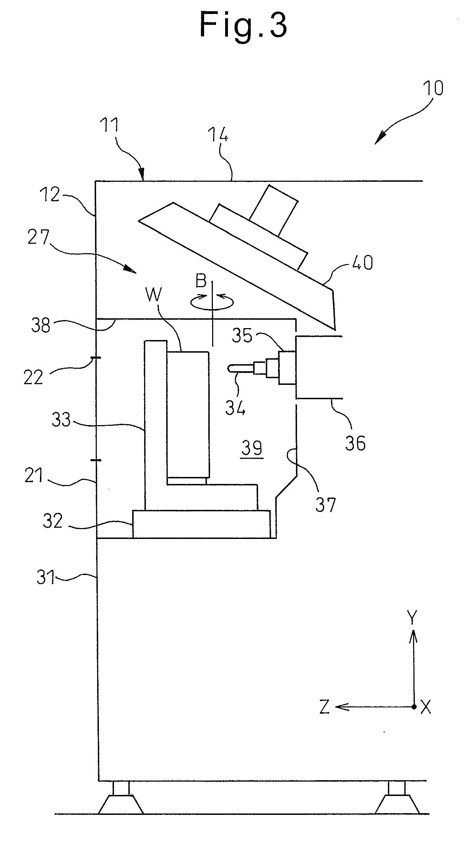

Fig. 3 is a partial see-through side view which schematically shows a machine body 27 of the machine tool 10 according to the first embodiment of the present invention. This machine tool 10 is set with a reference coordinate system of three orthogonal XYZ axes. The Y-axis extends in the vertical direction. The X-axis extends in a direction vertical to the paper surface along the horizontal plane. The Z-axis extends in the axial direction of the spindle of the machine tool 10 along the horizontal plane. Inside the inside pace of the splash guard 11, the above-mentioned machine body 27 is provided. The machine body 27 is provided with a bed 31 which is arranged on the floor surface and a table 32 which is arranged on the bed 31. On the table 32, a locating angle plate 33 is attached. At the locating angle plate 33, a workpiece W being machined is attached. The table 32 is driven to rotate in the B-axial direction about the axis of rotation which extends parallel to the Y-axis by a drive mechanism which is built into the bed 31.

The workpiece W is faced by a tool 34. The tool 34 can be attached to the spindle head 36 through the spindle 35. The tool 34 extends along the Z-axis. The spindle head 36, for example, can be moved linearly along the X-axis, Y-axis, and Z-axis by a plurality of linear feed mechanisms which are connected to the back surface of the bed 31. By combining these linear movements and the rotary movement of the above-mentioned table 32, relative movement between the tool 34 and the workpiece W is realized. The relative movement is realized based on the drive signal which is supplied from the NC system. The tool 34 which rotates during relative movement contacts the workpiece W at a predetermined machining point. In this way, the workpiece W is machined to a desired shape.

The spindle head 36 is coupled to a vertical telescopic cover 37. The vertical telescopic cover 37 moves while tracking movement of the spindle head 36 along the XY plane. On the other hand above the table 32, the tool magazine cover 38 is arranged horizontally. This vertical telescopic cover 37, tool magazine cover 38, and above-mentioned front panel 12 and the side panels 13a, 13b establish a machining region inside the splash guard 11. The above-mentioned monitoring window 22 and monitoring window 23 face this machining region 39. In this way, the operator can view the machining operations on the workpiece W performed inside of the machining region 39 through the monitoring window 22 and the monitoring window 23. Further, the operator opens the slide door 21 to attach and detach the workpiece W inside of the machining region 39.

Above the machining region 39 at the upper side from the tool magazine cover 38, a circular tool magazine 40 is arranged. In the tool magazine 40, a plurality of tools 34 are held. When exchange of a tool 34 is necessary, the spindle head 36 retracts from the machining region 39 to the outside and faces the tool magazine 40. At this time, the spindle head 36 returns the currently used tool 34 to the tool magazine 40 and receives the future used tool 34 from it. The spindle head 36 which the new tool 34 attached in this way again makes the tool 34 advance to the inside of the machining region 39. Inside of the machining region 39, machining operations on the workpiece W continue.

During the operation of the above such machine tool 10, the operator can visually check the state of the machining region 39 inside of the splash guard 11 from the monitoring window 22 or the monitoring window 23. At this time, for example, if the front end of the tool 34 is confirmed to be chipped, an abnormal sound is made inside of the machining region 39, etc., the operator can press the emergency stop button 25 so as to make the operation of the machine body 27 stop on an emergency basis. Further, the operator can, for example, make the operation of the machine body 27 stop on an emergency basis by pushing the emergency stop button 25 when the machine body 27 mistakenly operates when the slide door 21 is opened and the workpiece W is being attached to a locating angle plate 33 etc.

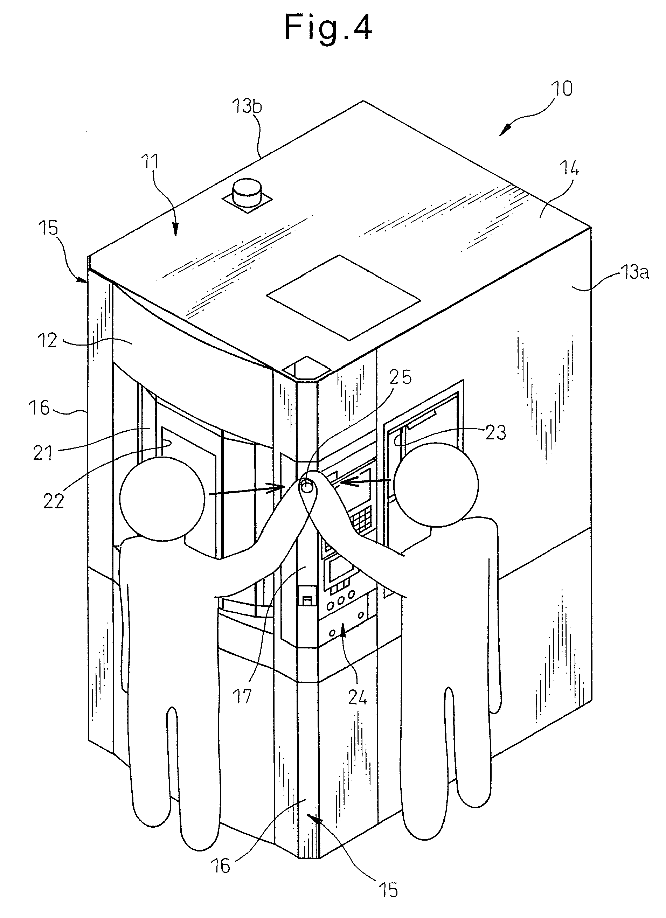

In the above way, the emergency stop button 25 is arranged at the edge part 15 which is formed between the front panel 12 and the right side panel 13a, that is, the chamfered surface 17. The chamfered surfaces 16 and 17 intersect the front panel 12 and the right side panel 13a by predetermined angles of intersection. Therefore, as shown in Fig. 4, the operator can easily see the emergency stop button 25 from both the front side of the front panel 12 and the front side of the right side panel 13a. The visibility of the emergency stop button 25 is improved. The operator can quickly and reliably push the emergency stop button 25 at the time of an emergency. The machine tool 10 makes an emergency stop.

Further, in the machine tool 10, it is sufficient to arrange a single emergency stop button 25 on the chamfered surface 16 or chamfered surface 17. Further, the position of the emergency stop button 25 does not change. As a result, there is no need, like in a conventional machine tool, to build in a movement mechanism such as a slide guide or rotary shaft and to change the position or orientation of the control panel to match with the position of the operator. The machine tool 10 is simplified in structure. Therefore, in realizing the machine tool 10, the manufacturing cost can be kept down. In addition, if the emergency stop button 25 is for example arranged at a position higher than the height of the shoulder of an operator, it is possible to prevent the shoulder, arm, or back of the operator from mistakenly contacting the emergency stop button 25.

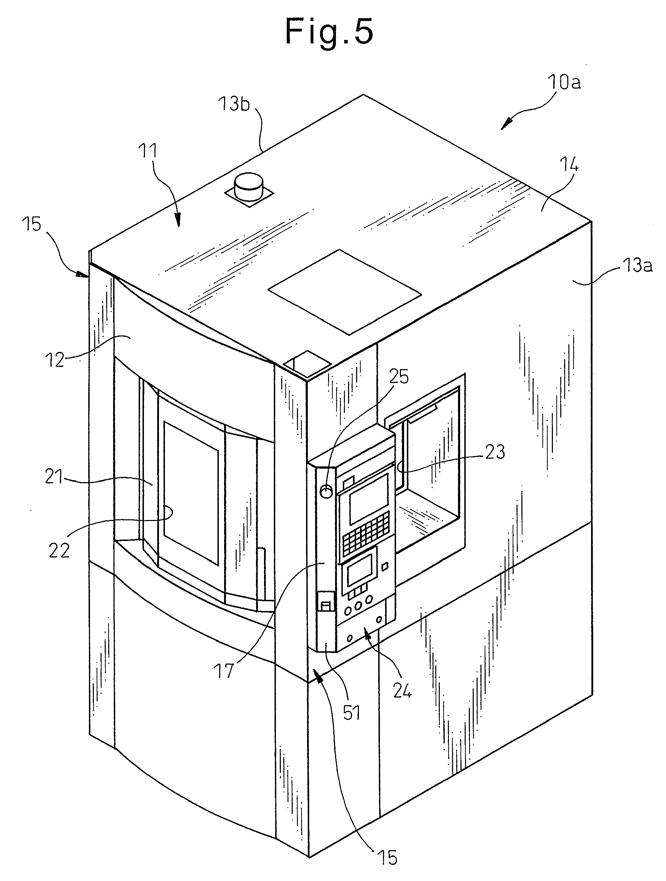

Fig. 5 is a perspective view which schematically shows the structure of a machine tool 10a according to a second embodiment which is apart from the presently claimed invention. In this machine tool 10a, the control console 24 sticks out from the surface of the right side panel 13a. The edge parts 15 of the present embodiment include the chamfered surface 51 which is formed at the edge part of the control console 24 which adjoins the front panel 12. The chamfered surface 51 intersects for example the surface of the control console 24 at a 45 degree angle of intersection. At the same time, the chamfered surface 51 intersects the imaginary plane which contains the surface of the front panel 12 by a 45 degree angle of intersection. By this configuration as well, actions and effects similar to the above-mentioned first embodiment can be realized.

In the above such machine tool 10 or 10a, the control console 24 may be installed not at the right side panel 13a, but at the front panel 12 as well. That is, the display panel and the input buttons of the control console 24 may be arranged at the front panel 12. In this case, the emergency stop button 25 is arranged at the right edge part 15 from the control console 24. Further, the emergency stop button 25 may be arranged not on the control console 24, but on the chamfered surface 16 of the splash guard 11 at the outside of the control console 24.

Further, the splash guard 11 need not be formed with chamfered surfaces 16. In this case, the splash guard 11 may have a bracket attached to it straddling the intersecting line of the perpendicularly intersecting front panel 12 and right side panel 13a. The emergency stop button 25 is attached to the mounting surface which is formed on this bracket. This mounting surface is configured in an orientation equal to the above-mentioned chamfered surface 16 or chamfered surface 17.

In addition, another emergency stop button 25 may be added at an edge part 15 which is formed between the front panel 12 and the left side panel 13b, between the left side panel 13b and the back surface panel, or between the right side panel 13a and the back surface panel. Further, the chamfered surfaces 16, 17, 51 may be formed from curved surfaces which bulge out toward the outside. Conversely, the chamfered surfaces 16, 17, 51 may, for example, be formed from curved surfaces which are sunk in toward the inside. The center axis which passes through the center of the arc of the curved surface which is defined in the horizontal cross-section extends in the vertical direction.

### Reference Signs List

10, 10a... machine tool
11... splash guard
15... edge part
16... chamfered surface
17... chamfered surface
22... window (monitoring window)
23... window (monitoring window)
24... control console
25... emergency stop switch (emergency stop button)
26... NC system
39... machining region
51... chamfered surface

## Claims

1. A machine tool (10) which is provided with an emergency stop system for making operation of a machine stop on an emergency basis, said machine tool (10) provided with
a splash guard (11) which surrounds a machining region (39) of said machine tool (10) and
an emergency stop switch (25) which is arranged at an edge part (15) which is formed between a first outside surface of said splash guard (11) and a second outside surface of said splash guard (11) which intersects said first outside surface and which outputs an emergency stop signal to said emergency stop system, **characterized in that** said edge part (15) is formed from a chamfered surface (16, 17) which intersects said first outside surface and said second outside surface, and said emergency stop switch (25) is arranged on said chamfered surface (16, 17).

## Patentansprüche

1. Werkzeugmaschine (10), die ein Nothaltesystem aufweist, um einen Betrieb einer Maschine basierend auf einem Notfall anzuhalten, wobei die Werkzeugmaschine Folgendes aufweist:
einen Spritzschutz (11), der einen Bearbeitungsbereich (39) der Werkzeugmaschine (10) umgibt; und
einen Nothalteschalter (25), der an einem Randbereich (15) angeordnet ist, der zwischen einer ersten Außenfläche des Spritzschutzes (11) und einer zweiten Außenfläche des Spritzschutzes (11) gebildet ist, welche die erste Außenfläche schneidet, und der ein Nothaltesignal an das Nothaltesystem ausgibt,
**dadurch gekennzeichnet, dass** der Randbereich (15) aus einer angeschrägten Fläche (16, 17) gebildet ist, welche die erste Außenfläche und die zweite Außenfläche schneidet, und der Nothalteschalter (25) auf der angeschrägten Fläche (16, 17) angeordnet ist.

## Revendications

1. Machine-outil (10) qui est pourvue d'un système d'arrêt d'urgence pour réaliser une opération d'arrêt de machine en cas d'urgence, ladite machine-outil (10) étant pourvue
d'une protection contre les projections (11) qui entoure une région d'usinage (39) de ladite machine-outil (10), et
d'un commutateur d'arrêt d'urgence (25) qui est agencé au niveau d'une partie de bord (15), qui est formée entre une première surface extérieure de ladite protection contre les projections (11) et une deuxième surface extérieure de ladite protection contre les projections (11) qui croise ladite première surface extérieure, et qui délivre un signal d'arrêt d'urgence au dit système d'arrêt d'urgence, **caractérisée en ce que** ladite partie de bord (15) est formée à partir d'une surface chanfreinée (16, 17) qui croise ladite première surface extérieure et ladite deuxième surface extérieure, et ledit commutateur d'arrêt d'urgence (25) est agencé sur ladite surface chanfreinée (16, 17).
